# EUROPÄISCHE PATENTSCHRIFT

(11) **EP 0 264 710 B1**
(45) Veröffentlichungstag und Bekanntmachung des Hinweises auf die Patenterteilung: **05.05.1993**
(21) Anmeldenummer: 87114585.0
(22) Anmeldetag: 06.10.1987
(51) Int. Cl.: C08F 226/02, B01D 17/05, C02F 1/54

(54) **Wasserlösliche quartäre Polyammoniumsalze, Verfahren zu ihrer Herstellung und ihre Verwendung**
Water-soluble quaternary polyammonium salts, process for their preparation and their use
Sels de poly-ammonium quaternaires solubles dans l'eau, procédé de leur préparation et leur utilisation

(30) Priorität: 06.10.1986 DD 295030
(43) Veröffentlichungstag der Anmeldung: 27.04.1988
(73) Patentinhaber: FRAUNHOFER-GESELLSCHAFT ZUR FÖRDERUNG DER ANGEWANDTEN FORSCHUNG E.V., 80636 München (DE)
(72) Erfinder: Jaeger, Werner Dr. sc. nat., DDR-1532 Kleinmachnow (DD); Wandrey, Christine Dr. rer. nat., DDR-1530 Teltow (DD); Hahn, Mahtias Dr. rer. nat., DDR-1513 Wilhelmshorst (DD); Ballschuh, Detlef Dr. rer. nat., DDR-1034 Berlin (DD); Ohme, Roland Dr. rer. nat., DDR-1180 Berlin (DD); Staeck, Rainer Dipl.-Ing.-Oek., DDR-4413 Sandersdorf (DD); Biering, Holger Dr., DDR-4440 Wolfen (DD)

(56) Entgegenhaltungen:
- CH-A- 431 994
- FR-A- 1 494 438

## Beschreibung

Die Erfindung betrifft neue quartäre Polyammoniumsalze, die sich sowohl einzeln als auch in Verbindung mit wasserlöslichen anionischen und/oder neutralen Polyelektrolyten vorteilhaft als Hilfsmittel für Trennprozesse, z.B. als Flockungsmittel bei der Abwasserbehandlung bzw. als Demulgatoren bei der Spaltung von Öl-in-Wasser-Emulsionen, sowie zur Herstellung leitfähiger Schichten, z.B. als Konduktivschicht bei der Herstellung von Elektrophotographiepapieren, einsetzen lassen.

Es ist bekannt, wasserlösliche quartäre Polyammoniumsalze mit der Struktur linearer polymerer Pyrrolidiniumverbindungen durch radikalisch initiierte Lösungspolymerisation von Dialkyldiallylammoniumsalzen in Wasser unter Verwendung verschiedener Initiatorsysteme herzustellen. Beispiele für derartige Verfahrensweisen sind aus US-A-3 288 770 und DD-A-127 729 bekannt.

Zur Erzielung besonderer Produkteigenschaften oder zur Herstellung von Polymeren mit höheren Molekülmassen werden Copolymerisationen mit vernetzenden Comonomeren durchgeführt. Dazu werden Mischungen aus Diallylammoniumsalzen und einem vernetzenden Comonomer, wie z.B. Dicarbonsäurediallylester (DD-A-127 729, 128 189, 128 247) oder Triallylaminhydrochlorid bzw. Tetraallylammoniumchlorid (FR-B-1 494 438, US-A-3 544 318), hergestellt, mit einem Initiator versetzt und polymerisiert. Bei allen bekannten Varianten der Polymerisation von Diallylammoniumsalzen allein oder mit beliebigen Comonomeren entstehen jedoch Polymere, die einen nicht unerheblichen Anteil an kurzkettigen Produkten enthalten. Ein Maß für die Molekülmasse und damit die Kettenlänge ist die relative Viskosität in Lösung ηᵣₑₗ. Bei allen bekannten Verfahren zur Herstellung von polymeren Ammoniumsalzen nimmt ηᵣₑₗ mit steigendem Umsatz ab, d.h., mit steigendem Umsatz werden zunehmend kurzkettige Produkte gebildet. Dieser Sachverhalt stellt für viele Anwendungsgebiete der wasserlöslichen Polyammoniumsalze einen Nachteil dar, wenn die jeweiligen Anwendungseigenschaften auf den höhermolekularen Komponenten von Gemischen von Polymermolekülen mit unterschiedlich langen Polymerketten beruhen.

Für viele Anwendungen, z.B. als Konduktivharze bei der Herstellung von Elektrophotographiepapier, werden die spezifischen technischen Eigenschaften günstiger, wenn das Polyammoniumsalz wasserlöslich, hochmolekular, aber stark verzweigt ist, d.h. einen hohen Anteil an vernetzenden Comonomeren aufweist (vgl. DD-A-127 729, 128 189, 128 247 und US-A-3 544 318).

Es sind zwar mehrere Verfahrensvarianten bekannt, z.B. aus US-A-3 544 318 oder J.E. Morgan, M.A. Yorke, J.E. Boothe, "Ions in Polymers", Advances in Chemistry, Series 187, S. 240, um durch Copolymerisation von quartären Diallylammoniumsalzen mit vernetzenden Comonomeren Polymere mit höherer mittlerer Molekülmasse herzustellen, wobei aber der Anteil an vernetzenden Comonomeren und damit der Verzweigungsgrad vergleichsweise gering ist und auch zwangsweise nicht unerhebliche Mengen an kurzkettigen Polymermolekülen auftreten. In DD-A-127 729, 128 189 und 128 247 wird zwar erwähnt, daß bei der Polymerisation von Dimethyldiallylammoniumchlorid (DMDAAC) mit z.B. Dicarbonsäurediallylestern bis zu 5 mol-% des Comonomers eingesetzt werden. Diese hohe Menge ist jedoch nur deshalb einsetzbar, weil die Comonomeren nur sehr wenig in Wasser löslich sind und deshalb auch nur unvollständig reagieren.

Aus der Literatur ist bekannt, daß bei zu hohem Anteil an vernetzendem Comonomer das erhaltene Polymerisat teilweise oder vollständig vernetzt (vergelt) und damit unlöslich wird, vgl. z.B. B. Vollmert, Grundriß der makromolekularen Chemie, Springer-Verlag Berlin 1962, S. 196, und damit für alle Anwendungen als lösliches Polymer unbrauchbar wird. Allgemein gilt, daß bei der Polymerisation von Mischungen aus einem Monomer und 0,1 Masse-% eines vernetzenden Comonomers das ursprünglich unbegrenzt lösliche Polymer in einen begrenzt quellbaren Zustand übergeht (Houben-Weyl, Methoden der organischen Chemie, 4. Auflage, Georg-Thieme Verlag Stuttgart 1961, Band 14/1, S. 1078). Bei der Lösungspolymerisation von Mischungen aus Dimethyldiallylammoniumchlorid (DMDAAC) und dem vernetzenden Comonomer Methyltriallylammoniumchlorid (MTAAC) in Wasser werden bereits bei Anteilen von nur 0,035 mol-% MTAAC unlösliche Gelanteile gebildet. Etwas höhere Anteile MTAAC können nur dann zur Copolymerisation mit DMDAAC unter Bildung löslicher Polymerer eingesetzt werden, wenn die Polymerisation nach dem wesentlich aufwendigeren Verfahren der Invers-Emulsionspolymerisation durchgeführt wird. Aus der Literatur zu Anwendungsuntersuchungen kann entnommen werden, daß die Grenze der Bildung völlig löslicher Polymerer nunmehr bei 0,5 mol-% MTAAC anzusetzen ist (J.E. Morgan, M.A. Yorke, J.E. Boothe, "Ions in Polymers", Advances in Chemistry, Series 187, S. 240). Jedoch enthalten auch diese Polymere einen hohen Anteil an kurzkettigen Produkten. Die Bildung unlöslicher vernetzter Polymerer stellt eine empfindliche Störung des Produktionsregimes bei der Herstellung löslicher Polymerer dar, deren Möglichkeit mit steigendem Umsatz wächst. Gleichzeitig sind Polymere, die auch nur einen geringen Anteil an Gel enthalten, für zahlreiche Anwendungen weniger gut geeignet und verursachen insbesondere in der Anwendungstechnik Störungen. Will man ein lösliches, verzweigtes Polymer durch Polymerisation nach dem vergleichsweise einfachen und kostengünstigen Verfahren der Lösungspolymerisation herstellen, so ist man gezwungen, mit minimalen Konzentrationen an vernetzendem Comonomer zu arbeiten.

Bei den bekannten Verfahren zur Copolymerisation von quartären Diallylammoniumsalzen mit vernetzenden Comonomeren zu löslichen Polymeren wird das einzusetzende Comonomer zu Beginn der Polymerisation mit dem Monomer vermischt (DD-A-127 729, 128 189, 128 247, US-A-3 544 318, J.E. Morgan, M.A. Yorke, J.E. Boothe, "Ions in Polymers", Advances in Chemistry, Series 187, S. 240). Je höher dabei der Anteil an vernetzendem Comonomer, bezogen auf das Monomer, ist, desto eher werden vernetzte unlösliche Anteile gebildet. Ein Polymerisationsverfahren zur Gewinnung löslicher Polymerer zwingt deshalb dazu, mit sehr geringen Anteilen an vernetzenden Comonomeren zu arbeiten. Das führt zwar zu Polymeren mit erhöhter Molekülmasse, jedoch ist der Verzweigungsgrad nur begrenzt einstellbar und insgesamt zu gering und der Anteil an kurzkettigen Polymeren zu hoch. Außerdem ist für das Polymerisationsverfahren keine hinreichende technologische Sicherheit gewährleistet.

FR-A-14 94 438 beschreibt die Herstellung wasserlöslicher, stark verzweigter Copolymerer aus Diallylammoniumsalzen und wasserlöslichen vernetzenden Comonomeren, wobei die Comonomerkomponente zu Beginn der Polyreaktion zugesetzt wird. Die Comonomeranteile der resultierenden Produkte sind nur gering, wodurch sich auch ein entsprechend geringer Verzweigungsgrad ergibt. In dieser Druckschrift ist ebenfalls beschrieben, daß wasserlösliche Copolymere nur dann erhalten werden, wenn bei der Lösungspolymerisation nicht mehr als 0,001 mol-% Methylenbis(acrylamid) oder 0,055 mol-% Triallylammoniumchlorid oder 0,001 mol-% Tetraallylammoniumchlorid zu Beginn der Polymerisation eingesetzt werden, da bei höheren Comonomeranteilen der Gelpunkt überschritten wird.

CH-A-431 994 betrifft ein Verfahren zur Herstellung von wäßrigen Kunststoffdispersionen, bei dem Monomere wie Acrylsäureester, Methacrylsäureester, Vinylester bzw. Styrole in wäßriger Emulsion zunächst bis zu einem Umsatz von wenigstens 40 % polymerisiert werden, worauf nach Zugabe polyfunktioneller Allylverbindungen als Vernetzungsmittel die Polymerisation zu Ende geführt wird. Diese Druckschrift betrifft entsprechend nur die spätere Zugabe eines Vernetzungsmittels zu einem Polymerisationsansatz, wobei die entsprechenden Produkte ein gutes Filmbildungsvermögen aufweisen. Diese Druckschrift betrifft entsprechend nicht das spezielle Problem wasserlöslicher quartärer, vernetzter Polyammoniumsalze, die Polyelektrolyte darstellen.

Es ist Aufgabe der Erfindung, wasserlösliche quartäre Polyammoniumsalze unter Verwendung von ungesättigten quartären Ammoniumsalzen und insbesondere von DMDAAC als Monomer, die aus hochverzweigten, hochmolekularen Polymeren mit einem geringen Anteil an kurzkettigen Produkten, ggfs. in Mischung mit linearen Polyammoniumsalzen auf der Basis des gleichen oder eines anderen ungesättigten quartären Ammoniumsalzes, bestehen, ein technologisch sicheres und wirtschaftlich günstiges Verfahren zu ihrer Herstellung, bei dem die Bildung von Gelanteilen oder eine vollständige Vergelung unter allen Umständen vermieden wird, sowie ihre Verwendung anzugeben.

Die Aufgabe wird anspruchsgemäß gelöst. Die abhängigen Ansprüche betreffen vorteilhafte Ausführungsformen. Die erfindungsgemäßen wasserlöslichen quartären Polyammoniumsalze sind Polymere auf der Basis von ungesättigten quartären Ammoniumsalzen und insbesondere von Dimethyldiallylammoniumchlorid (DMDAAC) sowie eines vernetzenden Comonomers und sind erhältlich durch radikalisch initiierte Polymerisation des ungesättigten quartären Ammoniumsalzes mit dem vernetzenden Comonomer, wobei das vernetzende Comonomer oder eine Mischung vernetzender Comonomerer während der fortschreitenden Homopolymerisation oder Copolymerisation des ungesättigten quartären Ammoniumsalzes nach Umsätzen von 25 bis 90 % in Mengen von 0,1 bis 3,0 mol-%, bezogen auf das ungesättigte quartäre Ammoniumsalz, zugesetzt wird.

Die erfindungsgemäßen Polyammoniumsalze sind bevorzugt dadurch gekennzeichnet, daß sie aus
A) 10 bis 100 Masse-% eines hochverzweigten Polymers einer Molekülmasse > 80 000 und vorteilhaft > 100000 mit 97,0 bis 99,9 mol-% vom ungesättigten quartären Ammoniumsalz abgeleiteten Monomereinheiten und entsprechend 0,1 bis 3,0 mol-% Comonomereinheiten eines oder mehrerer vernetzender Comonomerer, wobei die Summe der Mengenanteile der Monomereinheiten ungesättigten quartären Ammoniumsalzes und der Comonomereinheiten 100 mol-% beträgt,
und
B) 0 bis 90 Masse-% linearem Homopolymer des ungesättigten quartären Ammoniumsalzes
bestehen, wobei die Verzweigungsdichte des hochverzweigten Polyammoniumsalzes A) auf 100 Monomereinheiten des quartären Ammoniumsalzes 1 bis 25 Verzweigungsstellen und der Anteil an Molekülen mit [η] < 0,6 0 bis 5 Masse-% betragen.

Das Verfahren gemäß der Erfindung zur Herstellung der oben definierten wasserlöslichen Polyammoniumsalze beruht in seiner allgemeinen Konzeption auf der radikalisch initiierten Polymerisation eines ungesättigten quartären Ammoniumsalzes und insbesondere von DMDAAC mit einem oder mehreren vernetzenden Comonomeren und ist dadurch gekennzeichnet, daß das vernetzende Comonomer oder eine Mischung vernetzender Comonomerer während der fortschreitenden Homopolymerisation oder Copolymerisation des ungesättigten quartären Ammoniumsalzes nach Umsätzen von 25 bis 90 % in Mengen von 0,1 bis 3,0 mol-% dem Polymerisationssystem zugesetzt wird.

Nach einer bevorzugten Ausführungsform wird die Polymerisation in wäßriger Lösung mit einem Monomergehalt von 30 bis 70 Masse-% und bei Temperaturen von 18 bis 65 °C unter Verwendung eines geeigneten Initiators, eines Initiatorsystems oder geeigneter Initiatorkombinationen durchgeführt.

Als ungesättigte quartäre Ammoniumsalze eignen sich insbesondere Dimethyldiallylammoniumsalze, Vinylpyridiniumsalze, quartäre Ester und quartäre Amide von Acrylsäure und/oder Methacrylsäure sowie entsprechende Gemische dieser Ammoniumsalze, wobei als ungesättigtes quartäres Ammoniumsalz Dimethyldiallylammoniumchlorid bevorzugt ist, und zwar sowohl für den Anteil des hochverzweigten Polyammoniumsalzes als auch für den Anteil des linearen Polyammoniumsalzes.

Durch den geringen Anteil an kurzkettigen Polymeren wird bei gleichem Monomereinsatz eine höhere Ausbeute an anwendungstechnisch wirksamer Substanz erzielt.

Durch die erfindungsgemäße Verfahrenskonzeption entstehen durch Copolymerisation des ungesättigten quartären Ammoniumsalzes und insbesondere DMDAAC mit vernetzenden Comonomeren nach einer speziellen Verfahrensweise neue wasserlösliche quartäre Polyammoniumsalze, die aus hochverzweigten Polymeren einer mittleren Molmasse > 80 000 und vorteilhaft > 100000 mit 97,0 bis 99,9 mol-% Einheiten des ungesättigten quartären Ammoniumsalzes und entsprechend 0,1 bis 3,0 mol-% eines oder mehrerer vernetzender Comonomerer bestehen, wobei die Gesamtmenge der Einheiten des ungesättigten quartären Ammoniumsalzes und der Comonomereinheiten 100 mol-% beträgt, und die einen Anteil an linearen quartären Polyammoniumsalzen von 0 bis 90 Masse-% enthalten.

Geeignete vernetzende Comonomere sind Alkyltriallylammoniumsalze mit Alkylresten von 1 bis 3 Kohlenstoffatomen, Tetraallylammoniumsalze, Tetraallylalkylendiaminsalze, Triallylaminsalze sowie Methylenbis(acrylamid).

Die hochverzweigten Polyammoniumsalze und deren Mischungen mit linearen Polyammoniumsalzen sind vollständig wasserlöslich und frei von Gelanteilen. Die verzweigte Struktur kann durch Lichtstreuung in bekannter Weise nachgewiesen werden. Nach der Methode von Zimm und Stockmayer (Journal Chemical Physics 17 (1949) S. 1301-1314) kann die mittlere Verzweigungszahl pro Makromolekül bzw. die Verzweigungsdichte ermittelt werden. Im Fall von DMDAAC wurde z.B. festgestellt, daß auf 100 DMDAAC-Einheiten im Makromolekül 1 bis 25 Verzweigungsstellen entfallen.

Die neuen hochverzweigten Polyammoniumsalze sind im Gegensatz zu den linearen oder den bisher bekannten gering verzweigten Polymeren, die einen hohen Anteil an kurzkettigen Produkten enthalten, weiterhin gekennzeichnet durch ihre Unlöslichkeit in Methanol. Ein weiterer entscheidender Unterschied zwischen den neuen hochverzweigten Polyammoniumsalzen sowie den bekannten linearen Polyammoniumsalzen oder den bisher bekannten gering verzweigten Polymeren, bei denen das Vernetzungsmittel zu Beginn der Polymerisation zugegeben wird und die einen hohen Anteil an kurzkettigen Produkten enthalten, besteht darin, daß die erfindungsgemäßen Polymeren eine völlig andere Molekülmassenverteilung aufweisen, da bei ihnen der Anteil an kurzkettigen Produkten signifikant geringer ist. Bestimmt man die Molekülmassenverteilung durch fraktionierte Fällung (Ch. Wandrey, W.Jaeger, G. Reinisch, Acta Polymerica 33 (1982) S. 442-444), so zeigt sich, daß der Anteil von Molekülen mit [η] < 0,6 von sonst durchschnittlich 20 bis 30 % auf Werte von 0 bis 5 % gesenkt werden konnte.

Die hochverzweigten Polyammoniumsalze weisen im Gegensatz zu den bisher bekannten Polyammoniumsalzen bessere Anwendungseigenschaften auf. Bei der Applikation als Flockungsmittel zur Abtrennung suspendierter Feststoffe aus wäßrigen Suspensionen sowie bei der Schlammentwässerung oder aber bei der Spaltung von Öl-in-Wasser-Emulsionen werden mit verminderten Einsatzmengen gleiche oder bessere Trenneffekte erzielt. So wird bei der Flockung von Kohlesuspensionen bei gleicher Einsatzmenge die Trennleistung um 20 % erhöht bzw. kann bei gleicher Trennleistung die Einsatzmenge an Flockungsmittel um 20 % gesenkt werden. Bei der Emulsionsspaltung werden die Restölgehalte dar wäßrigen Phase bei gleichen Einsatzmengen um durchschnittlich 50 % gesenkt und die Lichtdurchlässsigkeiten um durchschnittlich 25 % verbessert. Vergleichbare Effekte werden hier mit bis zu 50 Masse-% weniger Polyammoniumsalz erzielt. Die Trenneffekte können durch die Kombination der erfindungsgemäßen Polyammoniumsalze mit an sich bekannten wasserlöslichen anionischen und/oder neutralen Polyelektrolyten noch verbessert werden.

Das erfindungsgemäße Verfahren wird so durchgeführt, daß bei dem an sich etwa zur Polymerisation von Dimethyldiallylammoniumverbindungen bekannten Verfahren in wäßriger Lösung das vernetzende Comonomer nicht, wie bisher üblich, zu Beginn, sondern erst im Verlaufe der bereits fortschreitenden Polymerisation der ungesättigten quartären Ammoniumverbindung nach Umsätzen von mindestens 25 % bis höchstens 90 % zugesetzt wird. Dabei erfolgt die Zugabe als wäßrige Lösung, ggfs. verdünnt mit Monomerlösung, in Anteilen von 0,1 bis 3 mol-% einmalig, kontinuierlich oder über einen gewissen oder den gesamten oben angegebenen Umsatzbereich verteilt. Bei dieser Verfahrensweise werden Mischungen aus linearen Polyammoniumsalzen, die vor der Vernetzerzugabe entstehen, und hochverzweigten Polyammoniumsalzen gebildet. Geht man jedoch von einer Lösung des ungesättigten quartären Ammoniumsalzes aus, die bereits zu Beginn der Polymerisation eine sehr geringe Menge von ≦ 0,03 mol-% Vernetzer enthält, und verfährt dann weiter in der beschriebenen Weise, so werden ausschließlich hochverzweigte Polyammoniumsalze gebildet.

Die Copolymerisation der ungesättigten Ammoniumsalze mit dem vernetzenden Comonomer erfolgt in wäßriger Lösung. Dabei wird eine 30 bis 70-%ige Lösung des Monomers bzw. eine derartige Monomerlösung, die bereits ≦ 0,03 mol-% Vernetzer enthält, vorgelegt und die Polymerisation mit einem geeigneten Initiator gestartet. Nachdem ein Umsatz im Bereich von 25 bis 90 % erreicht ist, wird das vernetzende Comonomer in Mengen von 0,1 bis 3,0 mol-%, bezogen auf monomeres ungesättigtes Ammoniumsalz, einmalig oder portionsweise zugesetzt oder innerhalb dieses Umsatzbereiche kontinuierlich zudosiert. Dabei werden Lösungen des Comonomers in Wasser oder in wäßriger Monomerlösung verwendet. Für MTAAC als Vernetzer können die vernetzerhaltigen Monomerlösungen in einem einfachen Verfahren entsprechend dem bekannten Verfahren zur halbkontinuierlichen DMDAAC-Synthese hergestellt werden. Die Polymersationstemperatur wird entweder bei 18 bis 80 °C konstantgehalten oder in diesem Bereich allmählich angehoben. Zur Einstellung einer anwendungsgerechten, niedrigen Endkonzentration kann die Reaktionsmischung während oder nach der Polymerisation verdünnt werden. Als Polymerisationsinitiatoren können beliebige, die radikalische Polymerisation startende Initiatoren, Initiatorsysteme oder Initiatorkombinationen verwendet werden, z. B. Azoinitiatoren, Persulfate, Peroxide oder Redoxsysteme, z. B. aus Persulfaten und Sulfiten oder Bisulfiten. Vorzugsweise wird mit dem Initiatorsystem aus einem wasserlöslichen Peroxodisulfat, einer pH-regulierenden Substanz und einer Stickstoffbase gearbeitet. Die Polymerisationen können unter Inertgas oder in Gegenwart von Luftsauerstoff durchgeführt werden und ergeben Endumsätze oberhalb 95 %.
Bei der Messung der relativen Lösungsviskositäten zeigte sich, daß bei der erfindungsgemäßen Zugabe des vernetzenden Comonomers ηᵣₑₗ mit dem Umsatz ansteigt, d.h., die Bildung kurzkettiger Anteile stark vermindert wurde (s. Beispiel 7).
Gleichzeitig wird durch den erhöhten Anteil an vernetzendem Comonomer auch ein höherer Verzweigungsgrad erreicht. Das erfindungsgemäße Verfahren hat den weiteren Vorteil, daß mit einem insgesamt höheren Vernetzeranteil ohne Gefahr der Gelbildung nach einem technologisch sicheren Regime gearbeitet werden kann, so daß dadurch nicht nur der Anteil kurzkettiger Polymerer entscheidend minimiert wird, sondern bei erhöhtem Verzweigungsgrad auch absolut höhers Molekülmassen > 80000 erreicht werden können.
Dieses Gesamtergebnis ist überraschend, da bekanntermaßen umso mehr vernetzte, unlösliche Anteile gebildet werden, je höher der Anteil an vernetzendem Comonomer, bezogen auf das Monomer, ist. Danach war bei Zusatz einer erhöhten Menge an Vernetzer im Verlaufe der Polymerisation, wenn also der Anteil an Monomer bereits abgenommen hat, eine erhebliche Vergelung zu erwarten.
Die nach dem erfindungsgemäßen Verfahren entstehenden quartären Polyammoniumsalze sind durch ihren geringen Anteil an kurzkettigen Polymeren und ihren hohen Verzweigungsgrad für alle Applikationen geeignet, bei denen die Anwendungseigenschaften auf den verzweigten und höhermolekularen Komponenten des Polymergemisches beruhen. Bei gleichem Monomereinsatz resultiert somit ein Polymerprodukt mit einem höheren Anteil anwendungsgeeigneter höhermolekularer wasserlöslicher Polyammoniumverbindungen, d. h., es wird eine höhere Ausbeute an Wirksubstanz erzielt.

Die Erfindungskonzeption ist nicht auf die Copolymerisation von quartären Diallylammoniumsalzen mit vernetzenden Comonomeren beschränkt. In gleicher Weise können auch durch Copolymerisation anderer ungesättigter quartärer Anmoniumsalze, z. B. von Vinylpyridiniumsalzen sowie quartären Estern oder Amiden der Acrylsäure und Methacrylsäure, mit vernetzenden Comonomeren hochverzweigte wasserlösliche Polymere hergestellt werden.

Die erfindungsgemäßen hochverzweigten Polyammoniumsalze fallen als wäßrige Lösung an. Sie können in einem einfachen thermischen Prozeß in rieselfähige, lösliche Pulver übergeführt werden.

Die Erfindung wird im folgenden anhand von Ausführungsbeispielen erläutert, wobei sich alle Angaben in mol-% auf die eingesetzte Menge an monomerem ungesättigten quartären Ammoniumsalze bzw. DMDAAC beziehen. Die Messung der relativen Viskosität in Lösung, ηᵣₑₗ, erfolgte an 1-%igen Lösungen der zuvor isolierten Polymeren in 1n NaCl-Lösung. Die Polymerisolierung wurde durch Eintragen der polymerisierten Reaktionsmischung in Aceton erreicht, wobei die Polymeren als weiße Feststoffe ausfallen. Enthalten die Polymerlösungen Anteile an vergeltem Polymer, so werden diese entfernt, bevor die Polymerisolierung erfolgt. Die Angabe A bedeutet die Zahl der Verzweigungen auf 100 DMDAAC-Einheiten. Die Angabe B bedeutet den Masseanteil Polymer in % mit [η] < 0,6.

### Ausführungsbeispiele

### Beispiel 1

180 g einer 50-%igen wäßrigen Dimethyldiallylammoniumchlorid (DMDAAC)-Lösung wurden mit 2 mol -% Ammoniumperoxodisulfat und 2 mol-% Ammoniumcarbonat versetzt und ohne Stickstoffspülung oder andere Methoden zur Entfernung von Sauerstoff in einer geeigneten Rührapparatur unter mäßigem Rühren und mit über 10 Stunden gleichmäßig verteilter Zugabe von 1 mol-% Triethanolamin polymerisiert. Dabei wurde die Temperatur 8 h bei 18 - 22 °C gehalten und anschließend innerhalb von 4 h allmählich auf 60 °C angehoben. Nach 6 h Polymerisationszeit wurden 1 mol-% Methyltriallylammoniumchlorid (MTAAC) in 50 g 50-%iger wäßriger DMDAAC-Lösung zugesetzt. Nach beendeter Reaktion resultierte eine klare Polymerlösung mit einem Endumsatz von 97%; ηᵣₑₗ = 3,47. A = 18; B = 3,6.
Zum Vergleich wurde eine Polymerisation unter gleichen Reaktionsbedingungen, jedoch mit Zugabe derselben Menge an Vernetzer zu Beginn der Polymerisation, durchgeführt. Es entstand ein völlig vergeltes Produkt.

### Beispiel 2

Eine Monomerlösung wurde nach einstündigem Spülen mit Stickstoff entsprechend der Verfahrensweise in Beispiel 1 unter Stickstoffatmosphäre polymerisiert. Der Endumsatz betrug 97 %; ηᵣₑₗ = 3,52. A = 20; B = 3,3.
Die Vergleichspolymerisation führte ebenfalls zu einem vergelten Produkt.

### Beispiel 3

Eine 50-%ige DMDAAC-Lösung wurde entsprechend der Verfahrensweise in Beispiel 1 polymerisiert, jedoch mit dem Unterschied, daß der Vernetzer MTAAC nach 3 h Polymerisationszeit (entsprechend 25 % Umsatz) zugesetzt wurde. Es resultierte eine klare Polymerlösung ohne Gelanteile, der Endumsatz betrug 96 %. A = 20; B = 4,1.

### Beispiel 4

Eine 50-%ige DMDAAC-Lösung wurde entsprechend der Verfahrensweise in Beispiel 1 polymerisiert, jedoch mit dem Unterschied, daß der Vernetzer MTAAC nach 9 h Polymerisationszeit (entsprechend 75 % Umsatz) zugesetzt wurde. Es resultierte eine klare Polymerlösung ohne Gelanteile, der Endumsatz betrug 97 %. A = 5 ; B = 0.

### Beispiel 5

Entsprechend der Verfahrensweise in Beispiel 1 wurde eine 50-%ige DMDAAC-Lösung mit Methyltriallylammoniumbromid als Vernetzer polymerisiert. Es resultierte eine klare Polymerlösung ohne Gelanteile, Endumsatz 96 %; ηᵣₑₗ = 3,48.

### Beispiel 6

Entsprechend der Verfahrensweise in Beispiel 1 wurde eine 50-%ige DMDAAC-Lösung mit Methyltriallylammoniumsulfat als Vernetzer polymerisiert. Es resultierte eine klare Polymerlösung ohne Gelanteile, Endumsatz 97 %; ηᵣₑₗ = 3,48.

### Beispiel 7

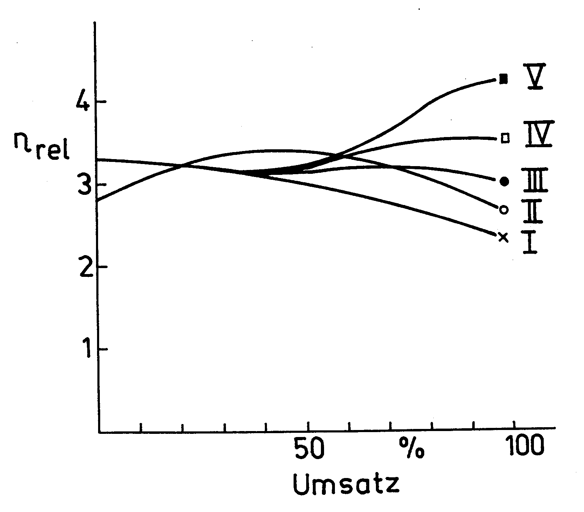

Entsprechend der Verfahrensweise in Beispiel 1 wurde eine 50-%ige DMDAAC-Lösung mit unterschiedlichen Mengen MTAAC als Vernetzer polymerisiert, wobei das vernetzende Comonomer entweder zu Beginn der Polymerisation oder aber im Verlauf der Polymerisation zugegeben wurde. Alle Polymerisationen ohne Vergelung hatten Endumsätze oberhalb 95 %. An den hieraus isolierten Polymeren wurden ηᵣₑₗ-Messungen durchgeführt.
Die Ergebnisse sind in Tabelle 1 zusammengefaßt.
Für verschiedene der in Tabelle 1 zusammengestellten Polymerisationen wurde der Verlauf von ηᵣₑₗ in Abhängigkeit vom Umsatz ermittelt; die Ergebnisse sind in der Figur dargestellt. ηᵣₑₗ ist ein Maß für die jeweilige kumulative (über den jeweiligen Umsatz gemittelte) Molekülmasse. Die Kurve I beschreibt eine Homopolymerisation von DMDAAC ohne Vernetzer. Die Molekülmasse nimmt stetig ab, d.h., mit steigendem Umsatz werden zunehmend kürzere Ketten gebildet, und die Molekülmassenverteilung verbreitert sich.

**Tabelle 1**

| Polymerisationsergebnisse nach Beispiel 7 | | | | | |
|---|---|---|---|---|---|
| Polymer Nr. | MTAAC-Zugabe Zeitpunkt | Menge (mol-%) | ηᵣₑₗ | A | B |
| 1 | Beginn, | 0,03 | 2,30 völlig löslich | | |
| 2 | Beginn | 0,10 | 2,50 enthält Gelanteile | | |
| 3 | Beginn | 0,25 | 2,65 enthält Gelanteile | | |
| 4 | Beginn | 0,50 | Vergelung | | |
| 5 | Nach 6 h | 0,10 | 2,70 völlig löslich. | 1 | 5 |
| 6 | Nach 6 h. | 0,50 | 3,17 völlig löslich | 11 | 4,5 |
| 7 | Nach 6 h | 0,70 | 3,40 völlig löslich | 15 | 4,0 |
| 8 | Nach 6 h | 1,00 | 3,47 völlig löslich. | 18 | 3,6 |
| 9 | Nach 6 h | 1,50 | 3,52 völlig löslich | 20 | 3,0 |
| 10 | Nach 6 h | 2,00 | Vergelung | | |
| 11 | Nach 6 h und nach 10 h | je 0,75 = 1,5 | 3,82 völlig löslich | 21 | 2,0 |
| 12 | Kontinuierl. Dosierung zwischen 6 h u. 11 h. | 2,00 | 4,25 völlig löslich | 22 | 1,0 |
| 13 | Kontinuierl. Dosierung zwischen 6 h u. 11 h | 3,00 | 4,50 völlig löslich | 25 | 0 |

Kurve II beschreibt eine Polymerisation von DMDAAC mit 0,03 mol-% MTAAC als vernetzendem Comonomer, zugesetzt zu Beginn der Polymerisation. Auch hier ist an der Abnahme von ηᵣₑₗ mit steigendem Umsatz die Bildung kurzkettiger Anteile unter starker Verbreiterung der Molekülmassenverteilung erkennbar. Bei Kurve III erfolgt der Zusatz von 0,25 mol-% MTAAC nach 6 Stunden Reaktionszeit. ηᵣₑₗ sinkt kaum, die Bildung kurzkettiger Anteile ist weitgebend zurückgedrängt. Bei Kurve IV wurden nach 6 Stunden Reaktionszeit 1,5 mol-% MTAAC einmalig zugesetzt, und bei Kurve V wurden 2 mol-% MTAAC kontinuierlich über 6 bis 11 Stunden Reaktionszeit dosiert. Hier steigt ηᵣₑₗ an, was nicht nur eine Vermeidung der Bildung kurzkettiger Anteile, sondern auch eine weitere Erhöhung der mittleren Molekülmasse ausweist.

### Beispiel 8

Entsprechend der Verfahrensweise in Beispiel 1 wurde eine 50-%ige DMDAAC-Lösung mit unterschiedlichen vernetzenden Comonomeren polymerisiert, wobei die vernetzenden Comonomeren entweder zu Beginn der Polymerisation oder nach einer Polymerisationsdauer von 6 h zugegeben wurden. Bestimmt wurde die maximale Menge an Comonomer, die zugegeben werden Konnte, ohne daß völlige Vergelung eintrat. Die Ergebnisse sind in Tabelle 2 zusammengefaßt.

**Tabelle 2**

| Maximale Zusatzmenge an vernetzenden Comonomeren ohne Vergelung | | | | | |
|---|---|---|---|---|---|
| Polymer Nr. | Comonomer | Zusatz zu Beginn der Polymerisation | | Zusatz nach 6 h Polymerisationsdauer | |
| | | Max. Menge (mol-%) | ηᵣₑₗ | Max. Menge (mol-%) | ηᵣₑₗ |
| 1 | Tetraallylammoniumbromid | 0,10 | 2,35 | 1,4 | 3,30 |
| 2 | Propyltriallylammoniumchlorid | 0,20 | 2,40 | 1,7 | 3,35 |
| 3 | N,N,N',N'-Tetraallylethylendiaminhydrochlorid | 0,35 | 2,05 | 2,2 | 2,85 |
| 4 | Triallylaminhydrochlorid | 0,40 | 2,20 | 2,5 | 3,25 |
| 5 | Methylenbis(acrylamid) | 0,60 | 2,10 | 3,0 | 3,20 |
| 6 | MTACC + Tetraallylammoniumbromid im Molverhältnis 1:1 | 0,10 | 2,38 | 1,6 | 3,35 |

### Beispiel 9

Entsprechend der Verfahrensweise in Beispiel 1 wurde eine 30-%ige DMDAAC-Lösung polymerisiert. Es resultierte eine klare Polymerlösung ohne Gelanteile, der Endumsatz betrug 95 %.

### Beispiel 10

Entsprechend der Verfahrensweise in Beispiel 1 wurde eine 70-%ige DMDAAC-Lösung polymerisiert, Es resultierte eine klare Polymerlösung ohne Gelanteile, der Endumsatz betrug 98 %.

### Beispiel 11

180 g einer 50-%igen wäßrigen DMDAAC-Lösung wurden mit 2 mol-% Ammoniumperoxodisulfat versetzt und ohne Stickstoffspülung in einer geeigneten Rührapparatur unter mäßigem Rühren 10 h bei 50 ^{°}C gehalten. Nach 4 h Polymerisationszeit wurden 1 mol-% MTAAC als 5 %ige wäßrige Lösung zugesetzt. Es resultierte eine klare Polymerlösung ohne Gelanteile.

### Beispiel 12

2000 mol einer 52,3 %igen wäßrigen DMDAAC-Lösung wurden in einer offenen Rührmaschine auf 40 ^{°}C erhitzt. Unter Rühren und starker Kühlung wurden 2 mol-% Ammoniumpersulfat und 2 mol-% Ammoniumcarbonat zugesetzt. Nach insgesamt 1 h erfolgte nun innerhalb von 10 h eine kontinuierliche Zugabe von 1 mol-% Triethanolamin, wobei die Temperatur zwischen 18 und 25 ^{°}C gehalten wurde. Nach 8 h Reaktionszeit wurden dem Ansatz 0,5 mol-% MTAAC in Form einer 10 mol-% MTAAC enthaltenden, ca. 50-%igen DMDAAC-Lösung auf einmal zudosiert. Mit fortschreitender Reaktion erhöhte sich die Temperatur bei gleichbleibender Kühlung allmählich auf 35 ^{°}C. Nach 11 h war unter diesen Bedingungen kein Temperaturanstieg mehr zu verzeichnen. Der Ansatz wurde jetzt unter Zugabe von Wasser zur Verdünnung auf eine Endkonzentration von 20 % auf 60 ^{°}C erwärmt. Bei dieser Temperatur wurde bis zur neutralen Reaktion gerührt. Es resultierte eine hochviskose Polymerlösung ohne Gelanteile mit einem Umsetzungsgrad von 97 %; ηᵣₑₗ = 3,0.

### Beispiel 13

Eine 52,3-%ige wäßrige DMDAAC-Lösung wurde entsprechend der Verfahrensweise in Beispiel 12 polymerisiert, jedoch mit dem Unterschied, daß als vernetzendes Comonomer 1,25 mol-% MTAAC in 2 Raten zugesetzt wurde, und zwar nach 6 h Polymerisationsdauer 0,75 mol -% und nach 10 h Polymerisationsdauer weitere 0,5 mol -%. Es resultierte eine Polymerlösung ohne Gelanteile. Der Endumsatz lag bei 98 %; ηᵣₑₗ = 3,60.

### Beispiel 14

Eine 52,3-%ige wäßrige DMDAAC-Lösung wurde entsprechend der Verfahrensweise in Beispiel 12 polymerisiert, jedoch mit dem Unterschied, daß als vernetzendes Comonomer 2,0 mol-% MTAAC, beginnend nach 5 h Polymerisationsdauer (entsprechend einem Umsatz von 40 %) über einen Zeitraum von 5 h kontinuierlich zudosiert wurde. Die Reaktionstemperatur wurde 8 h im Bereich von 18 bis 25 °C gehalten. Anschließend wurde der Ansatz kontinuierlich mit 10 °C/h verdünnt und bei 65 ^{°}C bis zur Neutralreaktion gerührt. Es resultierte eine Polymerlösung ohne Gelanteile, Endumsatz oberhalb 99 %; ηᵣₑₗ = 4,15.

### Beispiel 15

Die Polymeren Nr. 1 und Nr. 7 in Tabelle 1 wurden vergleichend auf ihre Wirkung als Flockungsmittel untersucht. Dazu wurden zu einer Aufschlämmung von 2 g Kaolin in 1 l Wasser 1 mg Polymer Nr. 1 bzw. Polymer Nr. 7 zugesetzt, worauf 4 min mit 200 U/min gerührt und dann die Sedimentationsgeschwindigkeit ν der Feststoffe gemessen wurde. Mit Polymer Nr. 1 war v = 5,7 m/h, mit Polymer Nr. 7 hingegen 12,1 m/h.

### Beispiel 16

Entsprechend der Verfahrensweise in Beispiel 1 wurde eine wäßrige DMDAAC-Lösung, die zu Beginn bereits 0,03 mol-% MTAAC enthielt, polymerisiert. Es resultierte eine gelfreie Polymerlösung, Emdumsatz 97 %; ηᵣₑₗ = 3,62.

### Beispiel 17

Entsprechend der Verfahrensweise in Beispiel 13 wurde eine wäßrige DMDAAC-Lösung, die zu Beginn bereits 0,025 mol-% MTAAC enthielt. polymerisiert. Es resultierte eine gelfreie Polymerlösung, Endumsatz 98 %; ηᵣₑₗ = 3,65.

### Beispiel 18

1 Mol DMDAAC wurde als 50-%ige wäßrige Lösung in einer Rührapparatur auf 80 ^{°}C temperiert. Anschließend wurden kontinuierlich über 10 Stunden insgesamt 10⁻² mol/l Azobisisobutyronitril als Initiator dosiert, wobei der Initiator in 20 ml Methanol gelöst war. Danach wurde der Ansatz noch 90 min bei 80 ^{°}C gerührt. Nach 2 h Reaktionszeit wurden über einen Zeitraum von 7,5 h 0,5 mol-% Methyl triallylammoniumchlorid, gelöst in 25 g 50-%iger wäßriger DMDAAC-Lösung, zudosiert. Es resultierte eine gelfreie Polymerlösung, Endumsatz 98 %; ηᵣₑₗ = 3,10.

### Beispiel 19

Entsprechend der Verfahrensweise in Beispiel 18 wurde bei 70 ^{°}C polymerisiert, wobei der Initiator in Dimethylacetamid gelöst war. Es resultierte eine gelfreie Polymerlösung, Endumsatz 96 %; ηᵣₑₗ = 3,14.

### Beispiel 20

Entsprechend der Verfahrensweise in Beispiel 18 wurde bei 80 ^{°}C unter Zusatz von 2 mol-% Ammoniumcarbonat polymerisiert. Als Initiator wurden 2 mol-% Ammoniumperoxodisulfat, gelöst in 20 ml Wasser, verwendet. Endumsatz 94 %; ηᵣₑₗ = 3,06.

### Beispiel 21

1 mol DMDAAC wurde als 50-%ige wäßrige Lösung in einer Rührapparatur vorgelegt, mit 0,01 mol Weinsäure und 0,02 mol Natriummetabisulfit und 10⁻⁴ mol Eisenammoniumsulfat versetzt und auf 40 ^{°}C temperiert. Anschließend wurden kontinuierlich über 6,5 h 0,02 mol Ammoniumperoxodisulfat als 1-molare wäßrige Lösung zugesetzt. Nach 1 h Reaktionszeit wurden über einen Zeitraum von 5 h 0,5 mol% Methyltriallylammoniumchlorid, gelöst in 25 g 50 %iger wäßriger DMDAAC-Lösung, zudosiert. Danach wurde der Ansatz noch 1 h bei 40 ^{°}C gerührt. Es resultierte eine gelfreie Polymerlösung, Endumsatz 97 %; ηᵣₑₗ = 3,01. Der Zusatz des Eisenammoniumsulfats kann entfallen, wenn in älteren eisernen Apparaturen gearbeitet wird, aus denen Eisenspuren während der Polymerisation in Lösung gehen können.

### Beispiel 22

50 g einer 50-%igen wäßrigen DMDAAC-Lösung werden in einer Rührapparatur vorgelegt und mit 0,80 g Ammoniumpersulfat und 0,30 g Lithiumbromid versetzt und 24 h bei Raumtemperatur gerührt. Im Zeitraum von 6 bis 18 h wurden 0,5 mol-% Methyl triallylammoniumchlorid, gelöst in 5 g 50-%iger wäßriger DMDAAC-Lösung, zudosiert. Es resultierte eine gelfreie Polymerlösung.

### Beispiel 23

1 mol DMDAAC wurde als 50-%ige wäßrige Lösung in einer Rührapparatur vorgelegt und auf 50 ^{°}C temperiert und danach mit 2 mol-% t-Butylperoxipivalat versetzt. Nach 3 h Reaktionszeit wurden über einen Zeitraum von 10 h 1 mol-% Methyltriallylammoniumchlorid, gelöst in 25 g 50-%iger wäßriger DMDAAC-Lösung, zudosiert. Nach insgesamt 18 h war die Reaktion beendet. Es resultierte eine gelfreie Polymerlösung, Endumsatz 95 %; ηᵣₑₗ = 3,49.

### Beispiel 24

Eine verbrauchte Bohrölemulsion mit einem Ölgehalt von 3 Vol-% wurde 10 s bei 20 °C mit den in Tabelle 3 angegebenen Aufrahmmitteln intensiv durchmischt, danach mit einer Drehzahl von ca. 10 min⁻¹ 45 min nachgerührt, worauf die Phasentrennung erfolgte. Anschließend wurden die Lichtdurchlässigkeit D der wäßrigen Phase in 1 cm Schichtdicke und der Restölgehalt c_{Öl} der wäßrigen Phase bestimmt.

**Tabelle 3**

| Polymer Nr. | Polymer Art | zugesetzte Menge (mg/l) | D (%) | c_{Öl} (mg/l) |
|---|---|---|---|---|
| 1 | Copolymer 83 % Acrylamid - 17 % MTMMS nach US-A 3 691 086 | 400 | 72 | 105 |
| 2 | Copolymer 75 % Acrylamid - 25 % Dimethyldiallylammoniumchlorid nach US-A 3 585 148 | 400 | 69 | 105 |
| 3 | Kationischer Polyvinylalkohol nach US- A 3 830 735 | 400 | 50 | 119 |
| 4 | Poly-DMDAAC nach DD- A 226 481 | 400 | 81 | 83 |
| 5 | Poly-D-v mit 0,5 bis 3,0 mol-% Methyl triallylammoniumchlorid | 400 | 94 | 36 |

### Beispiel 25

Eine sehr stabile Ölemulsion aus der Metallverarbeitung (Ölgehalt 3,7 Vol-%, Feststoffgehalt 6,8 g/l), die mit nichtionischen Emulgatoren vom Typ der Alkylenoxidaddukte der Fettalkohole und geringen Anteilen eines anionaktiven Emulgators vom Typ der Salze aliphatischer Carbonsäuren stabilisiert war, wurde mit 200 mg/l des erfindungsgemäßen hochverzweigten Polyammoniumsalzes und 100 mg/l anionischem Polyacrylamid bei 20 °C intensiv durchmischt und anschließend bei einer Drehzahl von 10 min⁻¹ des Rührens 45 min nachgerührt. Danach erfolgte die Phasentrennung. Die Lichtdurchlässigkeit D der wäßrigen Phase in 1 cm Schichtdicke betrug 94 %, der Restölgehalt 41 mg/l.

## Patentansprüche

1. Wasserlösliche quartäre Polyammoniumsalze auf der Basis ungesättigter quartärer Ammoniumsalze sowie vernetzender Comonomerer,
erhältlich durch radikalisch initiierte Polymerisation des ungesättigten quartären Ammoniumsalzes mit den vernetzenden Comonomeren, wobei das vernetzende Comonomer oder eine Mischung vernetzender Comonomerer während der fortschreitenden Homopolymerisation oder Copolymerisation des ungesättigten quartären Ammoniumsalzes nach Umsätzen von 25 bis 90 % in Mengen von 0,1 bis 3,0 mol-%, bezogen auf das ungesättigte quartäre Ammoniumsalz, zugesetzt wird.

2. Polyammoniumsalze nach Anspruch 1,
dadurch gekennzeichnet, daß sie aus
A) 10 bis 100 Masse-% eines hochverzweigten Polymers einer Molekülmasse > 80000 mit 97,0 bis 99,9 mol-% vom ungesättigten quartären Ammoniumsalz abgeleiteten Monomereinheiten und entsprechend 0,1 bis 3,0 mol-% Comonomereinheiten eines oder mehrerer vernetzender Comonomerer, wobei die Summe der Mengenanteile der Monomereinheiten des ungesättigten quartären Ammoniumsalzes und der Comonomereinheiten 100 mol-% beträgt,
und
B) 0 bis 90 Masse-% linearem Homopolymer des ungesättigten quartären Ammoniumsalzes
bestehen, wobei die Verzweigungsdichte des hochverzweigten Polyammoniumsalzes A) auf 100 Monomereinheiten des quartären Ammoniumsalzes 1 bis 25 Verzweigungsstellen und der Anteil an Molekülen mit [η] < 0,6 0 bis 5 Masse-% betragen.

3. Polyammoniumsalze nach Anspruch 1 oder 2, dadurch gekennzeichnet, daß das hochverzweigte Polyammoniumsalz eine Molekülmasse > 100 000 aufweist.

4. Polyammoniumsalze nach einem der Ansprüche 1 bis 3, dadurch gekennzeichnet, daß das ungesättigte quartäre Ammoniumsalz ein Dimethyldiallylammoniumsalz, ein Vinylpyridiniumsalz, ein quartärer Ester oder ein quartäres Amid der Acrylsäure und/oder der Methacrylsäure oder ein entsprechendes Gemisch dieser Ammoniumsalze ist.

5. Polyammoniumsalze nach einem der Ansprüche 1 bis 4, dadurch gekennzeichnet, daß das ungesättigte quartäre Ammoniumsalz Dimethyldiallylammoniumchlorid (DMDAAC) ist bzw. entsprechende Monomereinheiten von DMDAAC abgeleitet sind.

6. Polyammoniumsalze nach einem der Ansprüche 1 bis 5, dadurch gekennzeichnet, daß das vernetzende Comonomer ein Alkyltriallylammoniumsalz mit C₁₋₃-Alkylresten ist.

7. Polyammoniumsalze nach einem der Ansprüche 1 bis 6, dadurch gekennzeichnet, daß das vernetzende Comonomer ein Tetraallylammoniumsalz, ein Tetraallylalkylendiaminsalz, ein Triallylaminsalz und/oder Methylenbis(acrylamid) ist.

8. Verfahren zur Herstellung der wasserlöslichen quartären Polyammoniumsalze nach einem der Ansprüche 1 bis 7 durch radikalisch initiierte Polymerisation mit einem oder mehreren vernetzenden Comonomeren, dadurch gekennzeichnet, daß das vernetzende Comonomer oder eine Mischung vernetzender Comonomerer während der fortschreitenden Homopolymerisation oder Copolymerisation des ungesättigten quartären Ammoniumsalzes nach Umsätzen von 25 bis 90 % in Mengen von 0,1 bis 3,0 mol-%, bezogen auf das ungesättigte quartäre Ammoniumsalz, zugesetzt wird.

9. Verfahren nach Anspruch 8, dadurch gekennzeichnet, daß die Polymerisation in wäßriger Lösung mit einem Monomergehalt von 30 bis 70 Masse-% und bei Temperaturen von 18 bis 65 °C unter Verwendung eines geeigneten Initiators, eines Initiatorsystems oder geeigneter Initiatorkombinationen durchgeführt wird.

10. Verfahren nach Anspruch 8 oder 9, dadurch gekennzeichnet, daß das vernetzende Comonomer oder die Mischung vernetzender Comonomerer dem quartären Ammoniumsalz als wäßrige Lösung oder im Gemisch mit wäßrigen Lösungen des quartären Ammoniumsalzes zugesetzt werden.

11. Verfahren nach einem der Ansprüche 8 bis 10, dadurch gekennzeichnet, daß das vernetzende Comonomer oder die Mischung vernetzender Comonomerer innerhalb des Umsatzbereiches von 25 bis 90 % auf einmal, portionsweise oder kontinuierlich zugesetzt werden.

12. Verfahren nach einem der Ansprüche 8 bis 11, dadurch gekennzeichnet, daß als ungesättigte quartäre Ammoniumsalze Dimethyldiallylammoniumsalze, Vinylpyridiniumsalze, quartäre Ester und/oder quartäre Amide der Acrylsäure und/oder der Methacrylsäure oder entsprechende Gemische dieser quartären Ammoniumsalze eingesetzt werden.

13. Verwendung der wasserlöslichen quartären Polyammoniumsalze nach einem der Ansprüche 1 bis 7, als Hilfsmittel für Trennprozesse und insbesondere als Flockungsmittel, als Demulgatoren zum Brechen von Öl-in-Wasser-Emulsionen sowie zur Herstellung elektrisch leitender Schichten.

14. Verwendung nach Anspruch 13, dadurch gekennzeichnet, daß die wasserlöslichen quartären Polyammoniumsalze in Kombination mit an sich bekannten Polyelektrolyten eingesetzt werden, vorzugsweise mit Polyelektrolyte darstellenden anionischen und/oder neutralen Polymeren.

## Claims

1. Polyammonium salts based on unsaturated quaternary ammonium salts and cross-linking comonomers obtainable by radical-initiated polymerisation of the unsaturated quaternary ammonium salt with the cross-linking comonomers, the cross-linking comonomers or a mixture of cross-linking comonomers being added in quantities of 0.1 to 3.0 mol.% relative to the unsaturated quaternary ammonium salts during progressive homopolymerisation or copolymerisation of the unsaturated quaternary ammonium salt after conversion rates are 25 to 90%.

2. Polyammonium salts according to claim 1, characterised in that they comprise
A) 10 to 100 wt.% of a highly-branched polymer having a molecular weight > 80000 with 97.0 to 99.9 mol.% of monomer units derived from unsaturated quaternary ammonium salt and correspondingly 0.1 to 3.0 mol.% comonomer units of one or more cross-linking comonomers, the sum of the proportions of monomer units of the unsaturated quaternary ammonium salt and of comonomer units being 100 mol.%, and
B) 0 to 90 wt.% of linear homopolymer of the unsaturated quaternary ammonium salt,
the cross-linking density of the highly-branched polyammonium salt A) per 100 monomer units of the quaternary ammonium salt being 1 to 25 branching places and the proportion of molecules with < 0.6 being 0 to 5 wt.%.

3. Polyammonium salts according to claim 1 or 2, characterised in that the highly-branched polyammonium salt has a molecular weight > 100 000.

4. Polyammonium salts according to any of claims 1 to 3, characterised in that the unsaturated quaternary ammonium salt is a dimethyl diallyl ammonium salt, a vinyl pyridinium salt, a quaternary ester or a quaternary amide of acrylic acid and/or of methacrylic acid or a corresponding mixture of these ammonium salts.

5. Polyammonium salts according to any of claims 1 to 4, characterised in that the unsaturated quaternary ammonium salt is dimethyl diallyl ammonium chloride (DMDAAC) or corresponding monomer units are derived from DMDAAC.

6. Polyammonium salts according to any of claims 1 to 5, characterised in that the cross-linking comonomer is an alkyl triallyl ammonium salt with C₁₋₃-alkyl radicals.

7. Polyammonium salts according to any of claims 1 to 6, characterised in that the cross-linking comonomer is a tetraallyl ammonium salt, a tetraallyl alkylene diamine salt, a triallyl amine salt and/or methylene bis(acrylamide).

8. A method of preparing the water-soluble quaternary polyammonium salts according to any of claims 1 to 7 by radical-initiated polymerisation with one or more crosslinking comonomers, characterised in that the cross-linking comonomer or a mixture of cross-linking comonomers are added in proportions of 0.1 to 3.0 mol.% relative to the unsaturated quaternary ammonium salt, during progressive homopolymerisation or copolymerisation of the unsaturated quaternary ammonium salt after the conversion rates are 25 to 90%.

9. A method according to claim 8, characterised in that polymerisation is brought about in aqueous solution at a monomer content of 30 to 70 wt.% and at temperatures of 18 to 65°C, using a suitable initiator, an initiator system or suitable initiator combinations.

10. A method according to claim 8 or 9, characterised in that the cross-linking comonomer or mixture of cross-linking comonomers is added to the quaternary ammonium salt in the form of an aqueous solution or mixed with aqueous solutions of the quaternary ammonium salt.

11. A method according to any of claims 8 to 10, characterised in that the cross-linking comonomer or mixture of cross-linking comonomers is added in one go or in portions or continuously within the conversion range of 25 to 90%.

12. A method according to any of claims 8 to 11, characterised in that the unsaturated quaternary ammonium salts used are dimethyl diallyl ammonium salts, vinyl pyridinium salts, quaternary esters and/or quaternary amides of acrylic acid and/or methacrylic acid or corresponding mixtures of these quaternary ammonium salts.

13. Use of the water-soluble quaternary polyammonium salts according to any of claims 1 to 7 as adjuvants for separation processes, more particularly as flocculants or defoaming agents for breaking oil-in-water emulsions or for producing electrically conductive layers.

14. Use according to claim 13, characterised in that the water-soluble quaternary polyammonium salts are used in combination with known polyelectrolytes, preferably polyelectrolytes in the form of anionic and/or neutral polymers.

## Revendications

1. Poly(sels d'ammonium) à base de sels d'ammonium quaternaires insaturés ainsi que de comonomères réticulants, pouvant être obtenus par polymérisation amorcée ou initiée au niveau radicalaire du sel d'ammonium quaternaire insaturé avec les comonomères réticulants, le comonomère réticulant ou un mélange de comonomères réticulants étant ajouté durant le déroulement de l'homopolymérisation ou de la copolymérisation du sel d'ammonium quaternaire insaturé, après réaction de 25 à 90%, en quantités de 0,1 à 3,0 moles pour cent par rapport au sel d'ammonium quaternaire insaturé.

2. Poly(sels d'ammonium) selon la revendication 1, caractérisés en ce qu'ils se composent de
A) 10 à 100 % en masse d'un polymère hautement ramifié de masse moléculaire supérieure à 80.000 avec 97,0 à 99,9 moles pour cent d'unités monomères dérivées du sel d'ammonium quaternaire insaturé et une quantité correspondante de 0,1 à 3,0 mole pour cent d'unités comonomères d'un ou de plusieurs comonomères réticulants, la somme des parts des unités monomères du sel d'ammonium quaternaire insaturé et des parts des unités comonomères étant égale à 100 moles pour cent,
et
B) 0 à 90 % en masse d'un homopolymère linéaire du sel d'ammonium quaternaire insaturé,
la densité de ramification du poly(sel d'ammonium) hautement ramifié A) sur 100 unités monomères du sel d'ammonium quaternaire étant de 1 à 25 sites de ramification et la part de molécules de < 0,6 étant de O à 5 % en masse.

3. Poly(sels d'ammonium) selon la revendication 1 ou 2, caractérisés en ce que le poly(sel d'ammonium) hautement ramifié présente une masse moléculaire supérieure à 100.000.

4. Poly(sels d'ammonium) selon l'une des revendications 1 à 3, caractérisés en ce que le sel d'ammonium quaternaire insaturé est un sel de diméthyldiallylammonium, un sel de vinylpyridinium, un ester quaternaire ou un amide quaternaire d'acide acrylique et/ou d'acide méthacrylique ou un mélange correspondant de ces sels d'ammonium.

5. Poly(sels d'ammonium) selon l'une des revendications 1 à 4, caractérisés en ce que le sel d'ammonium quaternaire insaturé est du chlorure de diméthyldiallylammonium (DMDAAC) ou est dérivé d'unités monomères correspondantes de DMDAAC.

6. Poly(sels d'ammonium) selon l'une des revendications 1 à 5, caractérisés en ce que le comonomère réticulant est un sel d'alkyltriallylammonium avec des restes alkyle en C₁-C₃.

7. Poly(sels d'ammonium) selon l'une des revendications 1 à 6, caractérisés en ce que le comonomère réticulant est un sel de tétraallylammonium, un sel de tétraallylalkylènediamine, un sel de triallylamine et/ou un méthylènebis(acrylamide).

8. Procédé pour fabriquer les poly(sels d'ammonium) quaternaires solubles dans l'eau selon l'une des revendications 1 à 7 par polymérisation amorcée ou initiée au niveau radicalaire avec un ou plusieurs comonomères réticulants, caractérisé en ce que le comonomère réticulant ou un mélange de comonomères réticulants est ajouté durant le déroulement de l'homopolymérisation ou de la copolymérisation du sel d'ammonium quaternaire insaturé, après réaction de 25 à 90%, en quantités de 0,1 à 3,0 mole pour cent par rapport au sel d'ammonium quaternaire insaturé.

9. Procédé selon la revendication 8, caractérisé en ce que la polymérisation est effectuée en solution aqueuse avec une teneur en monomère de 30 à 70% en masse et à des températures de 18 à 65°C en utilisant un initiateur, un système d'initiateurs ou une combinaison d'initiateurs appropriés.

10. Procédé selon la revendication 8 ou 9, caractérisé en ce que le comonomère réticulant ou le mélange de comonomères réticulants est ajouté au sel d'ammonium quaternaire sous forme de solution aqueuse ou en mélange avec des solutions aqueuses du sel d'ammonium quaternaire.

11. Procédé selon l'une des revendications 8 à 10, caractérisé en ce que le comonomère réticulant ou le mélange de comonomères réticulants est ajouté, dans l'intervalle de 25 à 90% de réaction, par portions ou de manière continue.

12. Procédé selon l'une des revendications 8 à 11, caractérisé en ce qu'on emploie comme sel d'ammonium quaternaire insaturé des sels de diméthyldiallylammonium, des sels de vinylpyridinium, des esters quaternaires et/ou des amides quaternaires d'acide acrylique et/ou d'acide méthacrylique ou des mélanges correspondants de ces sels d'ammonium quaternaires.

13. Utilisation des poly(sels d'ammonium) quaternaires solubles dans l'eau selon l'une des revendications 1 à 7 comme adjuvants pour des processus de séparation et en particulier comme agents de floculation, comme désémulsifiants pour briser les émulsions d'huile dans l'eau, ainsi que pour la fabrication de couches conductrices d'électricité.

14. Utilisation selon la revendication 13, caractérisée en ce que les poly(sels d'ammonium) quaternaires solubles dans l'eau sont introduits en combinaison avec des polyélectrolytes connus en soi, de préférence avec des polymères anioniques et/ou neutres formant des polyélectrolytes.
